# EUROPÄISCHE PATENTSCHRIFT

(11) **EP 2 676 042 B1**
(45) Veröffentlichungstag und Bekanntmachung des Hinweises auf die Patenterteilung: **01.07.2015**
(21) Anmeldenummer: 12705832.9
(22) Anmeldetag: 16.02.2012
(51) Int. Cl.: F16C 19/54

(54) **AXIAL-RADIALWÄLZLAGER, INSBESONDERE FÜR DIE LAGERUNG VON ROTORBLÄTTERN AN EINER WINDKRAFTANLAGE**
AXIAL-RADIAL ROLLING CONTACT BEARING, IN PARTICULAR FOR SUPPORTING ROTOR BLADES ON A WIND TURBINE
PALIER À ROULEMENTS AXIAUX-RADIAUX, EN PARTICULIER POUR LE SUPPORT DE PALES DE ROTOR SUR UNE ÉOLIENNE

(30) Priorität: 16.02.2011 DE 102011000769
(43) Veröffentlichungstag der Anmeldung: 25.12.2013
(73) Patentinhaber: ThyssenKrupp Rothe Erde GmbH, 44137 Dortmund (DE)
(72) Erfinder: HANDRECK, Thomas, 59609 Anröchte (DE)
(74) Vertreter: Loock, Jan Pieter
(86) Internationale Anmeldenummer: PCT/EP2012/052680
(87) Internationale Veröffentlichungsnummer: WO 2012/110595

(56) Entgegenhaltungen:
- WO-A1-2007/003866
- DE-A1-102007 057 253
- DE-A1-102007 062 056

## Beschreibung

Die Erfindung betrifft ein Axial-Radialwälzlager, insbesondere für die Lagerung von Rotorblättern an einer Windkraftanlage, mit einem ersten Lagerring und einem zweiten Lagerring, die einen Innenring und einen Außenring bilden, sowie mit einer Radialwälzlagerreihe mit einer Vielzahl von Axialwälzlagerreihen zwischen dem ersten und dem zweiten Lagerring.

Bekannte Windkraftanlagen weisen gemäß ihrem üblichen Aufbau einen Turm auf, an dessen oberem Ende ein Generator in einem Generatorgehäuse angeordnet ist. An den Generator ist direkt oder über ein Getriebe ein Rotor angeschlossen, der typischerweise drei Rotorblätter trägt. Um die Stellung der Rotorblätter an unterschiedliche Windgeschwindigkeiten anzupassen, sind diese um eine Rotorblattlängsachse drehbar an den Rotor angeschlossen. Hierzu werden Axial-Radialgroßwälzlager eingesetzt, die in der Praxis entsprechend auch als Flügelverstelllager bezeichnet werden. Die Aufgabe dieser Lager und einer zugeordneten Stellanordnung ist es den Anstellwinkel des zugeordneten Rotorblattes an die jeweilige Windgeschwindigkeit bzw. den Betriebszustand der Anlage anzupassen. In der Praxis werden hierzu häufig doppelreihige Vierpunktkugellager eingesetzt, wie sie beispielsweise in der DE 20 2006 008 288 und der WO 2009/147865 A1 beschrieben sind. Doppelreihige Vierpunktkugellager können vergleichsweise kostengünstig hergestellt werden, weisen einen kleinen Bauraum auf und können hohe Momentenlasten übertragen.

Während bei den bekannten Windkraftanlagen in der Regel nur eine Änderung des Anstellwinkels der Flügel erfolgt, wenn sich die Windgeschwindigkeit signifikant ändert, wird nun angestrebt den Anstellwinkel häufiger als bisher, insbesondere synchron mit der Rotordrehzahl zu variieren, wodurch sich hinsichtlich der Flügelverstelllager eine viel größere Dauerbelastung ergibt. Es werden deshalb Axial-Radialwälzlager benötigt, die bei einem möglichst geringeren Einbauraum eine erhöhte Tragfähigkeit und Langlebigkeit aufweisen. In diesem Zusammenhang ist zu berücksichtigen, dass unter Windlast aufgrund der erheblichen Länge der Rotorblätter sehr große Kippmomente auf das Flügelverstelllager wirken, welche die Wälzkörper für die axiale Abstützung im besonderen Maße belasten.

Axial-Radialwälzlager mit den eingangs beschriebenen Merkmalen sind aus der DE 10 2007 057 253 A1_{,}

WO 2007/003866 A1 (Fig. 10), der DE 20 2005 026 141 A1 und der DE 10 2008 009 740 A1 bekannt, wobei die dort beschriebenen Axial-Radialwälzlager dreireihig mit zwei in axialer Richtung voneinander beabstandeten Axialwälzlagerreihen sowie einer dazwischen angeordneten Radialwälzlagerreihe ausgebildet sind. Um die bei dem Einsatz als Flügelverstelllager auftretenden großen Kippmomente aufnehmen zu können, müssen die Wälzkörper der Axialwälzlagerreihen eine hinreichende Größe aufweisen.

Vor diesem Hintergrund liegt der Erfindung die Aufgabe zugrunde, eine maximale Tragfähigkeit bei optimaler Bauraumausnutzung zu ermöglichen.

Ausgehend von einem Axial-Radialwälzlager mit den eingangs beschriebenen Merkmalen wird die Aufgabe erfindungsgemäß dadurch gelöst, dass mindestens vier Axialwälzlagerreihen vorgesehen sind, die in axialer Richtung in einem Abstand zueinander angeordnet sind und dass die Radialwälzlagerreihe in axialer Richtung zwischen der zweiten und der dritten Axialwälzlagerreihe angeordnet ist. Die vorliegende Erfindung betrifft damit ein Axial-Radialwälzlager, welches zumindest und vorzugsweise genau fünfreihig ausgebildet ist. Obwohl gegenüber den bekannten Ausführungen von Flügelverstelllagern zusätzliche Axialwälzlagerreihen vorhanden sind, kann eine bessere Bauraumausnutzung erreicht werden, weil durch die auf insgesamt vier Axialwälzlagerreihen verteilte Abstützung die einzelnen Wälzkörper verkleinert werden können.

Auch wenn eine Ausgestaltung mit genau fünf Wälzlagerreihen bevorzugt ist, umfasst die Erfindung auch Ausgestaltungen bei denen an die beschriebene Struktur mit vier Axialwälzlagerreihen und einer Radialwälzlagerreihe in axialer Richtung gesehen an einer oder vorzugsweise an beiden Seiten zusätzliche Lagerreihen anschließen. Die beschriebene fünfreihige Struktur bildet dann ein Ausschnitt eines solchen Wälzlagers. Weitere Wälzlagerreihen können vorgesehen sein, um die Tragkraft weiter zu erhöhen, wobei ausgehend von der erfindungsgemäß vorgesehenen Radialwälzlagerreihe ein symmetrischer Aufbau bevorzugt ist.

Das erfindungsgemäße Axial-Radialwälzlager ist in besonderem Maße für die Lagerung von Rotorblättern an einer Windkraftanlage geeignet. Insbesondere können bei dem typischerweise für ein solches Flügelverstelllager vorgesehenen Bauraum die Tragfähigkeit sowie die Langlebigkeit erhöht werden. Es ist deshalb nicht notwendig ausgehend von den bekannten Konstruktionen den Bereich der Flügelverstelllager vollständig neu auszulegen, wobei das erfindungsgemäße Lager auch im Rahmen einer Wartung als Ersatz für ein doppelreihiges Vierpunktlager gleicher Baugröße nachgerüstet werden kann.

Als Wälzkörper für die Radialwälzlagerreihe und die vier Axialwälzlagerreihen sind üblicherweise Rollen vorgesehen. Die weitere Ausgestaltung der Rollen ist dabei nicht eingeschränkt, so dass diese entweder eine genau zylindrische oder auch eine bombierte Oberfläche aufweisen können, um die Toleranz gegen ein Verkippen in einem gewissen Maße zu erhöhen. An den einzelnen Lagerreihen können die Wälzkörper in Käfigen oder Käfigsegmenten angeordnet oder durch Zwischenstücke voneinander getrennt sein. Neben entsprechenden Elementen aus Kunststoff sind auch offene oder geschlossene, wahlweise auch segmentierte Stahlkäfige geeignet, die optional mit einer Kunststoffbeschichtung versehen werden können.

Für sämtliche Axialwälzlagerreihen kann eine ähnliche oder im Wesentlichen identische Ausgestaltung vorgesehen sein. Insbesondere können die Axialwälzlagerreihen bei einem gleichen Radius angeordnet sein und/oder gleiche Wälzkörper aufweisen. Um eine gleichmäßige Kraftverteilung zu erreichen, kann auch der Abstand zwischen der ersten und der zweiten Axialwälzlagerreihe gleich dem Abstand zwischen der dritten und der vierten Axialwälzlagerreihe sein. Damit wird nämlich auch erreicht, dass der Abstand zwischen der ersten und der dritten Axialwälzlagerreihe gleich dem Abstand zwischen der zweiten und der vierten Axialwälzlagerreihe, die unter Belastung jeweils paarweise zusammen wirken, ist. Gemäß einer besonders bevorzugten Ausgestaltung der Erfindung weisen die in axialer Richtung aufeinanderfolgenden Axialwälzlagerreihen einen im Wesentlichen gleichen Abstand auf. Zusätzlich kann auch die Radialwälzlagerreihe in axialer Richtung mittig oder in etwa mittig zwischen der zweiten und der dritten Axialwälzlagerreihe angeordnet sein. Dann liegt hinsichtlich der Anordnung der Lagerreihen ausgehend von einer durch die Radialwälzlagerreihe verlaufenden Ebene eine weitgehende Symmetrie vor. Eine gewisse Asymmetrie des gesamten Lagers ergibt sich aber üblicherweise dadurch, dass das Lager in axialer Richtung an einer Seite mit einem der Lagerringe und an der anderen Seite mit dem anderen Lagerring vorsteht, um an beiden Seiten jeweils einen stirnseitigen Anschluss an die gegeneinander abzustützenden Teile zu ermöglichen.

Eine weitere bevorzugte Ausgestaltung der Erfindung betrifft die Ausgestaltung der Lagerringe, wobei der erste Lagerring zwischen der zweiten und der dritten Axialwälzlagerreihe in zwei Segmente und der zweite Lagerring zwischen der ersten und der zweiten sowie zwischen der dritten und der vierten Axialwälzlagerreihe in insgesamt drei Segmente geteilt sind. Bei einer solchen geteilten Ausgestaltung der beiden Lagerringe ist eine besonders kostengünstige und einfache Herstellung möglich, wobei auch eine leichte Anordnung der Wälzkörper zwischen den Lagerringen, d. h. den Lagerringsegmenten, ermöglicht wird. Grundsätzlich kann der zweigeteilte erste Lagerring als Innenring oder Außenring vorgesehen sein, wobei dann entsprechend der zweite, dreigeteilte Lagerring den Außenring bzw. Innenring bildet. Bei einer segmentierten Ausgestaltung der Lagerringe sind auch die Laufflächen der einzelnen Lagerreihen bei der Herstellung gut zugänglich und können präzise bearbeitet werden. Insbesondere kann auch bei einer segmentierten Ausgestaltung der Lagerringe eine besonders hohe Fertigungsgenauigkeit erreicht werden. Schließlich besteht die Möglichkeit durch die Verspannung der Lagerringsegmente gegeneinander auch die Vorspannung an den einzelnen Axialwälzlagerreihen zu verändern.

So ist es gemäß einer bevorzugten Ausgestaltung der Erfindung vorgesehen, dass die Axialwälzlagerreihen mit unterschiedlicher Vorspannung zwischen den Lagerringen angeordnet sind. Der Begriff Vorspannung bezieht sich im Rahmen der Erfindung auf die im unbelasteten Zustand auf die Wälzkörper wirkende Kraft. Diese kann im unbelasteten Zustand von null, wenn ein geringfügiges Spiel oder gerade ein kraftfreier Kontakt vorliegt, bis zu einer erheblichen permanenten Kraftbeaufschlagung der Lagerreihen reichen, die aber stets unterhalb einer vorgegebenen Maximalbelastung liegt. Die Vorspannung kann durch die Geometrie der Lagerreihen, d. h. die Abmessung der Wälzkörper, sowie der zugeordneten, in den Lagerringen gebildeten Lagerbahnen eingestellt werden, wobei die Elastizität der Lagerkomponenten zu berücksichtigen ist. Wenn die Lagerringe gemäß der zuvor beschriebenen bevorzugten Ausgestaltung aus mehreren Lagerringsegmenten gebildet sind, kann die Vorspannung unter Berücksichtigung der Elastizität auch durch die Anzugsmomente der Befestigungsschrauben eingestellt werden, mit denen die jeweils einen Lagerring bildenden Lagerringsegmente verbunden sind.

Durch die Einstellung der Vorspannung an den einzelnen Axialwälzlagerreihen kann beispielsweise erreicht werden, dass die zweite und die dritte Axialwälzlagerreihe eine größere Vorspannung als die erste und die vierte Lagerreihe aufweisen. Dieser bevorzugten Ausgestaltung liegt die Erkenntnis zugrunde, dass die auf das Axial-Radialwälzlager wirkenden Momente ein Verkippen des Innenringes gegenüber dem Außenring bewirken können, wobei dann bei einem bestimmten Kippwinkel der absolute Hub aufgrund des wirksamen Hebels an den äußeren Axialwälzlagerreihen, d. h. der ersten und der vierten Axialwälzlagerreihe, größer ist, so dass diese bei einer gleichmäßigen Vorspannung sämtlicher Axialwälzlagerreihen einem erhöhten Risiko der Beschädigung ausgesetzt sind. Durch eine größere Vorspannung der zweiten und der dritten Axialwälzlagerreihe wird aber erreicht, dass bei einem Verkippen die maximale Belastung der ersten und der vierten Lagerreihe erst später erreicht werden. Insbesondere kann durch eine größere Vorspannung der zweiten und der dritten Axialwälzlagerreihe erreicht werden, dass bei der Einwirkung von Kippmomenten die maximal zulässige Belastung an sämtlichen Axialwälzlagerreihen bei etwa dem gleichen Verkippungswinkel erreicht wird, wodurch insgesamt die Gesamttraglast maximiert wird.

Ein weiterer Aspekt der vorliegenden Erfindung betrifft die Befestigung des Axial-Radialwälzlagers, wobei an zumindest einem der Lagerringe Durchgangslöcher für Befestigungsmittel vorgesehen sind. Bei Befestigungsmitteln wie Schrauben besteht das Problem, dass bei dem Festziehen zusätzliche Kräfte erzeugt werden, welche durch die Elastizität des Materials der Lager-ringe die Geometrie der Lagerreihen verändern können. Um diesen Einfluss zu verringern, kann vorgesehen sein an den Durchgangslöchern ausgehend von einer Endfläche des zugeordneten Lagerringes eine Vertiefung, insbesondere ein Sackloch, vorzusehen, um den Kraftabstützungspunkt des jeweils zugeordneten Befestigungsmittels, üblicherweise einer Schraube, in axialer Richtung in den zugeordneten Lagerring hinein zu versetzen.

Der Gegenstand der Erfindung ist auch eine Windkraftanlage mit einem Rotor und mit jeweils um eine Rotorlängsachse drehbaren Rotorblättern, die mit dem zuvor beschriebenen Axial-Radialwälzlager an den Rotor angeschlossen sind.

Die Erfindung wird im Folgenden anhand einer lediglich ein Ausführungsbeispiel darstellenden Zeichnung näher erläutert. Es zeigen:
- **Fig. 1**: ein erfindungsgemäßes Axial-Radialwälzlager, welches als Flügelverstelllager ein Rotorblatt einer Windkraftanlage mit dem Rotor verbindet.
- **Fig. 2**: das in der Fig. 1 dargestellte Lager in einem Detailausschnitt,
- **Fig. 3**: eine Windkraftanlage.

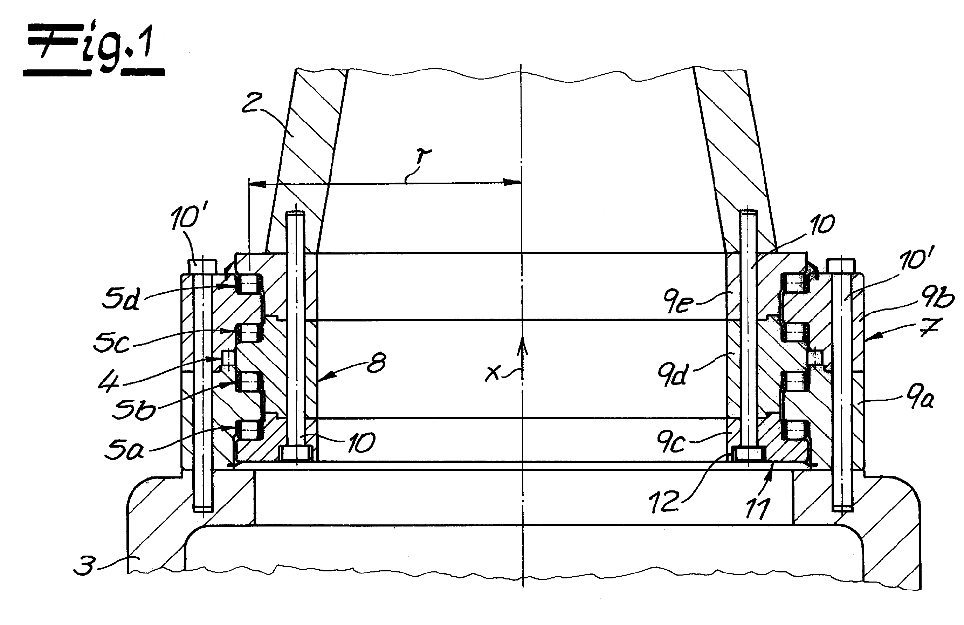

Die Fig. 1 zeigt ein Axial-Radialwälzlager im montiertem Zustand, mit dem an einer Windkraftanlage 1 ein Rotorblatt 2 drehbar an einem Rotor 3 befestigt ist. Verstellmittel, mit denen das Rotorblatt 2 um seine Rotorblattlängsachse gedreht werden kann, sind zum Zwecke der Übersichtlichkeit nicht dargestellt.

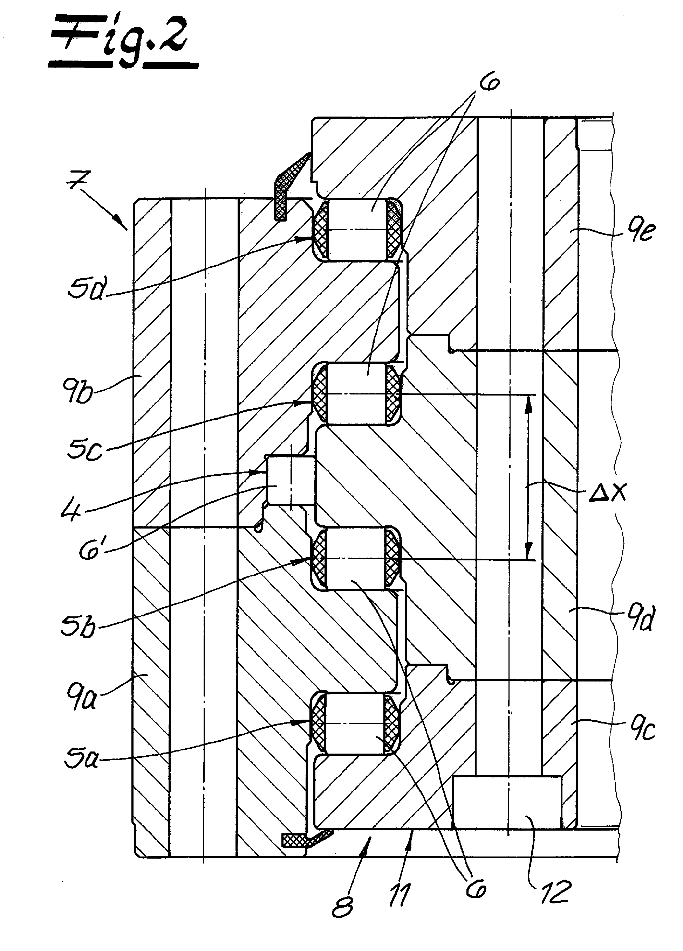

Das in der Fig. 2 in einem Detailausschnitt dargestellte Axial-Radialwälzlager ist fünfreihig ausgebildet und weist eine Radialwälzlagerreihe 4 sowie vier Axialwälzlagerreihen 5a, 5b, 5c, 5d auf. Die Radialwälzlagerreihe 4 und die Axialwälzlagerreihen 5a, 5b, 5c, 5d sind mit ihren als Rollen 6, 6' ausgebildeten Wälzkörpern zwischen einem ersten Lagerring 7 als Außenring und einem zweiten Lagerring 8 als Innenring angeordnet sind. Der erste Lagerring 7 ist zwischen der zweiten Axialwälzlagerreihe 5b und der dritten Axialwälzlagerreihe 5c zweigeteilt, wobei die Trennung der Segmente 9a, 9b außerhalb der Lauffläche für die Radialwälzlagerreihe 4 erfolgt, um dort die Laufeigenschaften nicht zu beeinträchtigen. Der zweite Lagerring 8 ist in drei Segmente 9c, 9d, 9e aufgeteilt, wobei die Trennung zwischen der ersten Axialwälzlagerreihe 5a und der zweiten Axialwälzlagerreihe 5b sowie zwischen der dritten Axialwälzlagerreihe 5c und der vierten Axialwälzlagerreihe 5d erfolgt. Die Axialwälzlagerreihen 5a, 5b, 5c, 5d sind bei einem gleichen Radius r sowie in axialer Richtung x mit einem gleichen Abstand Δ x angeordnet und weisen auch die gleichen Wälzkörper auf. Es ergibt sich so eine besonders gleichmäßige, auf alle vier Axialwälzlagerreihen 5a, 5b, 5c und 5d verteilte Abstützung in axialer Richtung x. Aufgrund der typischerweise bei der Lagerung von Rotorblättern wirkenden Kräfte ist die lediglich eine Radialwälzlagerreihe 4 zur Radialabstützung ausreichend.

Durch die gleichmäßige Verteilung der Axialkräfte auf die vier Axialwälzlagerreihen 5a, 5b, 5c, 5d ist es möglich vergleichsweise kleine Rollen 6 vorzusehen, so dass insgesamt eine sehr hohe Tragkraft bei einem geringen Bauraum erreicht wird.

Um die Tragkraft noch weiter zu erhöhen, ist gemäß einer bevorzugten Ausgestaltung der Erfindung vorgesehen, dass die zweite Axialwälzlagerreihe 5b und die dritte Axialwälzlagerreihe 5c eine größere Vorspannung als die erste Axialwälzlagerreihe 5a und die vierte Axialwälzlagerreihe 5d aufweisen. Bei der Lagerung von Rotorblättern 2 können nämlich aufgrund der erheblichen Länge der Rotorblätter 2 und der Windlast sehr große Kippmomente auftreten, welche den ersten Lagerring 7 gegenüber dem zweiten Lagerring 8 verkippen. Aufgrund der wirksamen Hebel ist dann der absolute Hub an der ersten Axialwälzlagerreihe 5a und der vierten Axialwälzlagerreihe 5d größer als an den mittleren Axialwälzlagerreihen 5b, 5c. Grundsätzlich würde also bei einer gleichen Vorspannung aller Axialwälzlagerreihen 5a, 5b, 5c, 5d an den äußeren Axialwälzlagerreihen 5a, 5d eine größere Gefahr der Überlastung bestehen. Durch eine Veränderung der Vorspannung kann aber erreicht werden, dass eine vorgegebene Maximalbelastung an allen vier Axialwälzlagerreihen 5a, 5b, 5c, 5d bei einem in etwa gleichen Kippwinkel auftritt, so dass dann eine insgesamt maximierte Tragkraft gewährleistet ist.

Hinsichtlich des Einsatzes an Windkraftanlagen ist zu berücksichtigen, dass eine nachträgliche Wartung und ein Austausch der Lager äußerst aufwendig ist und deshalb möglichst vermieden werden soll.

Gemäß der Fig. 1 ist der zweite Lagerring 8 mit Schrauben 10 an das Rotorblatt 2 und der erste Lagerring 7 mit Schrauben 10' an den Rotor 3 angeschlossen. Um zu vermeiden, dass an dem zweiten Lagerring 8 das Anziehen der Schrauben 10 zu einer Veränderung der Geometrie der ersten Axialwälzlagerreihe 5a führt, ist ausgehend von einer Endfläche 11 des zweiten Lagerrings 8 eine Vertiefung 12 in Form eines Senkloches vorgesehen, um den Kraftabstützungspunkt des Kopfes der Schraube 10 in axialer Richtung x in den zweiten Lagerring 8 hinein zu versetzen.

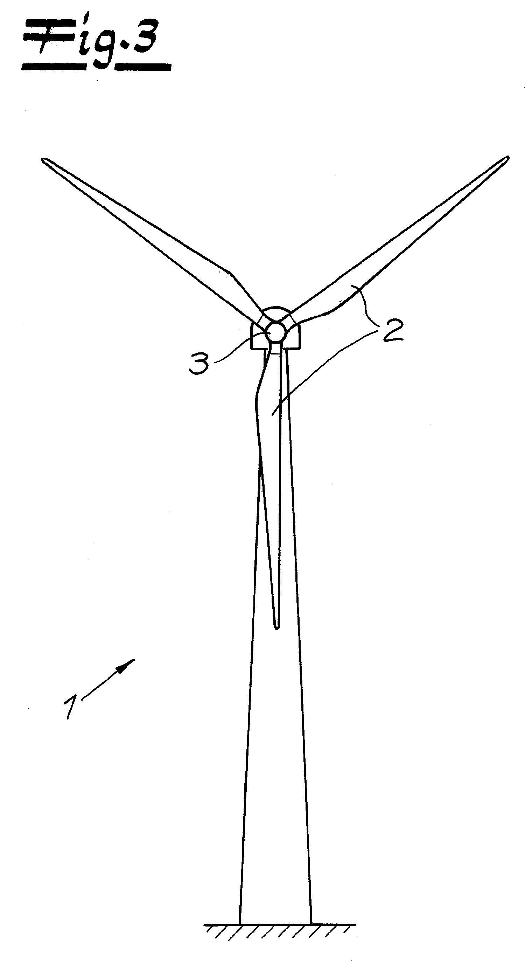

Fig. 3 zeigt exemplarisch eine Windkraftanlage 1, bei der drei verstellbare Rotorblätter 2 an einem Rotor 3 angeordnet sind.

## Patentansprüche

1. Axial-Radialwälzlager, insbesondere für die Lagerung von Rotorblättern (2) an einer Windkraftanlage (1), mit einem ersten Lagerring (7) und einem zweiten Lagerring (8), die einen Innenring und einen Außenring bilden, sowie mit einer Rollen (6') als Wälzkörper aufweisende Radialwälzlagerreihe (4) und einer Vielzahl von Axialwälzlagerreihen zwischen dem ersten und dem zweiten Lagerring (7, 8), **dadurch gekennzeichnet, dass** mindestens vier Axialwälzlagerreihen (5a, 5b, 5c, 5d) mit Rollen (6) als Wälzkörper vorgesehen sind, die in axialer Richtung (x) in einem Abstand zueinander angeordnet sind und dass die Radialwälzlagerreihe (4) in axialer Richtung (x) zwischen der zweiten und der dritten Axialwälzlagerreihe (5b, 5c) angeordnet ist.

2. Axial-Radialwälzlager nach Anspruch 1, **dadurch gekennzeichnet, dass** dieses mit den vier Axialwälzlagerreihen (5a, 5b, 5c, 5d) und der Radialwälzlagerreihe (4) genau fünfreihig ausgeführt ist.

3. Axial-Radialwälzlager nach Anspruch 1 oder 2, **dadurch gekennzeichnet, dass** der erste Lagerring (7) zwischen der zweiten Axialwälzlagerreihe (5b) und der dritten Axialwälzlagerreihe (5c) in zwei Lagerringsegmente (9a, 9b) und der zweite Lagerring (8) zwischen der ersten und der zweiten Axialwälzlagerreihe (5a, 5b) sowie zwischen der dritten und der vierten Axialwälzlagerreihe (5c, 5d) in insgesamt drei Segmente (9c, 9d, 9e) geteilt sind.

4. Axial-Radialwälzlager nach einem der Ansprüche 1 bis 3, **dadurch gekennzeichnet, dass** die Axialwälzlagerreihen (5a, 5b, 5c, 5d) mit unterschiedlicher Vorspannung zwischen den Lagerringen (7, 8) angeordnet sind.

5. Axial-Radialwälzlager nach Anspruch 4, **dadurch gekennzeichnet, dass** die zweite und die dritte Axialwälzlagerreihe (5b, 5c) eine größere Vorspannung als die erste und die vierte Axialwälzlagerreihe (5a, 5d) aufweisen.

6. Axial-Radialwälzlager nach einem der Ansprüche 1 bis 5, **dadurch gekennzeichnet, dass** sämtliche Axiallagerreihen (5a, 5b, 5c, 5d) in einem gleichen Radius angeordnet sind und gleiche Wälzkörper aufweisen.

7. Axial-Radialwälzlager nach einem der Ansprüche 1 bis 6, **dadurch gekennzeichnet, dass** der Abstand zwischen der ersten und der dritten Axialwälzlagerreihe (5a, 5c) gleich dem Abstand zwischen der zweiten und der vierten Axialwälzlagerreihe (5b, 5d) ist.

8. Axial-Radialwälzlager nach Anspruch 7, **dadurch gekennzeichnet, dass** die in axialer Richtung (x) aufeinander folgenden Axialwälzlagerreihen (5a, 5b, 5c, 5d) im Wesentlichen einen gleichen Abstand (Δx) zueinander aufweisen.

9. Axial-Radialwälzlager nach einem der Ansprüche 1 bis 8, **dadurch gekennzeichnet, dass** zumindest an einem der Lagerringe (8) Durchgangslöcher für Befestigungsmittel vorgesehen sind, wobei an den Durchgangslöchern ausgehend von einer Endfläche (11) des zugeordneten Lagerrings (8) eine Vertiefung (12), insbesondere ein Senkloch vorgesehen ist, um den Kraftabstützungspunkt des jeweils zugeordneten Befestigungsmittel in axialer Richtung (x) in den zugeordneten Lagerring (8) hinein zu versetzen.

10. Windkraftanlage (1) mit einem Rotor (3) und mit jeweils um eine Rotorblattlängsachse drehbaren Rotorblättern (2), **dadurch gekennzeichnet, dass** die Rotorblätter (2) jeweils mit einem Axial-Radialwälzlager nach einem der Ansprüche 1 bis 9 an den Rotor (3) angeschlossen sind.

## Claims

1. Axial/radial anti-friction bearing, in particular for mounting rotor blades (2) on a wind power plant (1), having a first bearing ring (7) and a second bearing ring (8) which form an inner ring and an outer ring, and having a radial anti-friction bearing row (4) which has rollers (6') as rolling bodies, and a multiplicity of axial anti-friction bearing rows between the first and the second bearing ring (7, 8), **characterized in that** at least four axial anti-friction bearing rows (5a, 5b, 5c, 5d) are provided with rollers (6) as rolling bodies which are arranged at a spacing from one another in the axial direction (x), and **in that** the radial anti-friction bearing row (4) is arranged in the axial direction (x) between the second and the third axial anti-friction bearing row (5b, 5c).

2. Axial/radial anti-friction bearing according to Claim 1, **characterized in that** it is configured in precisely five rows by way of the four axial anti-friction bearing rows (5a, 5b, 5c, 5d) and the radial anti-friction bearing row (4).

3. Axial/radial anti-friction bearing according to Claim 1 or 2, **characterized in that** the first bearing ring (7) is split between the second axial anti-friction bearing row (5b) and the third axial anti-friction bearing row (5c) into two bearing ring segments (9a, 9b) and the second bearing ring (8) is split between the first and the second axial anti-friction bearing row (5a, 5b) and between the third and the fourth axial anti-friction bearing row (5c, 5d) into a total of three segments (9c, 9d, 9e).

4. Axial/radial anti-friction bearing according to one of Claims 1 to 3, **characterized in that** the axial anti-friction bearing rows (5a, 5b, 5c, 5d) are arranged with a different prestress between the bearing rings (7, 8).

5. Axial/radial anti-friction bearing according to Claim 4, **characterized in that** the second and the third axial anti-friction bearing row (5b, 5c) have a greater prestress than the first and the fourth axial anti-friction bearing row (5a, 5d).

6. Axial/radial anti-friction bearing according to one of Claims 1 to 5, **characterized in that** all the axial bearing rows (5a, 5b, 5c, 5d) are arranged at an identical radius and have identical rolling bodies.

7. Axial/radial anti-friction bearing according to one of Claims 1 to 6, **characterized in that** the spacing between the first and the third axial anti-friction bearing row (5a, 5c) is equal to the spacing between the second and the fourth axial anti-friction bearing row (5b, 5d).

8. Axial/radial anti-friction bearing according to Claim 7, **characterized in that** the axial anti-friction bearing rows (5a, 5b, 5c, 5d) which follow one another in the axial direction (x) are at substantially an identical spacing (Δx) from one another.

9. Axial/radial anti-friction bearing according to one of Claims 1 to 8, **characterized in that** through holes for fastening means are provided at least on one of the bearing rings (8), a depression (12), in particular a countersunk hole, being provided at the through holes, starting from an end face (11) of the associated bearing ring (8), in order to offset the force support point of the respectively associated fastening means into the associated bearing ring (8) in the axial direction (x).

10. Wind power plant (1) having a rotor (3) and having rotor blades (2) which can be rotated in each case about a rotor blade longitudinal axis, **characterized in that** the rotor blades (2) are connected to the rotor (3) in each case by way of an axial/radial anti-friction bearing according to one of Claims 1 to 9.

## Revendications

1. Palier à roulement axial-radial, en particulier pour le support de pales de rotor (2) sur une éolienne (1), comprenant une première bague de palier (7) et une deuxième bague de palier (8) qui forment une bague intérieure et une bague extérieure, et comprenant une rangée de palier à roulement radial (4) comprenant des rouleaux (6') en tant que corps de roulement et une pluralité de rangées de palier à roulement axial entre la première et la deuxième bague de palier (7, 8), **caractérisé en ce qu'**au moins quatre rangées de palier à roulement axial (5a, 5b, 5c, 5d) sont pourvues de rouleaux (6) en tant que corps de roulement, lesquels rouleaux sont disposés à une certaine distance les uns des autres dans la direction axiale (x), et **en ce que** la rangée de palier à roulement radial (4) est disposée entre la deuxième et la troisième rangée de palier à roulement axial (5b, 5c) dans la direction axiale (x).

2. Palier à roulement axial-radial selon la revendication 1, **caractérisé en ce que** celui-ci est réalisé de manière à présenter exactement cinq rangées avec les quatre rangées de palier à roulement axial (5a, 5b, 5c, 5d) et la rangée de palier à roulement radial (4).

3. Palier à roulement axial-radial selon la revendication 1 ou 2, **caractérisé en ce que** la première bague de palier (7) est divisée en deux segments de bague de palier (9a, 9b) entre la deuxième rangée de palier à roulement axial (5b) et la troisième rangée de palier à roulement axial (5c) et la deuxième bague de palier (8) est divisée en trois segments (9c, 9d, 9e) en tout entre la première et la deuxième rangée de palier à roulement axial (5a, 5b) ainsi qu'entre la troisième et la quatrième rangée de palier à roulement axial (5c, 5d).

4. Palier à roulement axial-radial selon l'une quelconque des revendications 1 à 3, **caractérisé en ce que** les rangées de palier à roulement axial (5a, 5b, 5c, 5d) sont disposées avec des précontraintes différentes entre les bagues de palier (7, 8).

5. Palier à roulement axial-radial selon la revendication 4, **caractérisé en ce que** la deuxième et la troisième rangée de palier à roulement axial (5b, 5c) présentent une plus grande précontrainte que la première et la quatrième rangée de palier à roulement axial (5a, 5d).

6. Palier à roulement axial-radial selon l'une quelconque des revendications 1 à 5, **caractérisé en ce que** toutes les rangées de palier axial (5a, 5b, 5c, 5d) sont disposées sur un même rayon et comprennent des corps de roulement identiques.

7. Palier à roulement axial-radial selon l'une quelconque des revendications 1 à 6, **caractérisé en ce que** la distance entre la première et la troisième rangée de palier à roulement axial (5a, 5c) est identique à la distance entre la deuxième et la quatrième rangée de palier à roulement axial (5b, 5d).

8. Palier à roulement axial-radial selon la revendication 7, **caractérisé en ce que** les rangées de palier à roulement axial (5a, 5b, 5c, 5d) successives dans la direction axiale (x) présentent essentiellement une distance identique (Δx) les unes par rapport aux autres.

9. Palier à roulement axial-radial selon l'une quelconque des revendications 1 à 8, **caractérisé en ce que** des trous traversants pour des moyens de fixation sont prévus au moins sur l'une des bagues de palier (8), un évidement (12), en particulier un trou fraisé, étant prévu sur les trous traversants à partir d'une surface d'extrémité (11) de la bague de palier associée (8), afin de décaler le point de support de force du moyen de fixation associé respectivement dans la direction axiale (x) dans la bague de palier associée (8).

10. Éolienne (1) comprenant un rotor (3) et comprenant des pales de rotor (2) pouvant tourner respectivement autour d'un axe longitudinal de pale de rotor, **caractérisée en ce que** les pales de rotor (2) sont raccordées au rotor (3) à l'aide d'un palier à roulement axial-radial respectif selon l'une quelconque des revendications 1 à 9.
